# EUROPEAN PATENT APPLICATION

(11) **EP 4 586 045 A1**
(43) Date of publication of application: **16.07.2025**
(21) Application number: 23906316.7
(22) Date of filing: 22.06.2023
(51) Int. Cl.: G05G 1/46, B60T 7/04, B60T 7/06, B60T 11/18, G05G 1/30

(54) **VEHICULAR OPERATION PEDAL DEVICE**

(30) Priority: 21.12.2022 JP 2022204677
(71) Applicant: Toyoda Iron Works Co., Ltd., Toyota-shi, Aichi 471-8507 (JP)
(72) Inventor: NAGAI, Kenichiro, Toyota-shi, Aichi 471-8507 (JP); FUKAMI, Sho, Kariya-shi, Aichi 448-8688 (JP)
(74) Representative: Mewburn Ellis LLP
(86) International application number: PCT/JP2023/023152
(87) International publication number: WO 2024/134930

(57) **Abstract**

A vehicular operation pedal device includes a pedal arm (20), a telescopic device (30), and a link mechanism (40). The link mechanism (40) includes a coupling link (50) and a coupling lever (70). The coupling lever (70) includes a first coupling portion (71) coupled to the coupling link (50) so as to be rotatable about a third center line (L3), a support portion (73) supported by a lever support shaft (60) so as to be rotatable about a fourth center line (L4), and a second coupling portion (72) coupled to the telescopic device (30) so as to be rotatable about a fifth center line (L5). The coupling lever (70) has a structure in which the third center line (L3) of the first coupling portion (71), the fourth center line (L4) of the support portion (73), and the fifth center line (L5) of the second coupling portion (72) are disposed at positions corresponding to three vertices of an acute triangle when viewed in a direction in which the first center line (L1) extends.

## Description

### TECHNICAL FIELD

The present disclosure relates to a vehicular operation pedal device.

### BACKGROUND ART

Vehicles such as automobiles are equipped with vehicular operation pedal devices such as a brake pedal device, an accelerator pedal device, and a clutch pedal device.

Patent Literature 1 discloses a brake pedal device. The brake pedal device includes a pedal arm, a telescopic device (specifically, a master cylinder), and an operation rod. The pedal arm extends upward from a pedal support shaft. The pedal arm rotates about a center line of the pedal support shaft in response to a depression operation by the driver of the vehicle. The master cylinder is located forward of the pedal arm. The operation rod couples the pedal arm and the master cylinder. In this brake pedal device, when the pedal arm is depressed, a depression force is transmitted to the master cylinder via the operation rod. Accordingly, the vehicle is decelerated.

### CITATION LIST

### Patent Literature

Patent Literature 1: Japanese Laid-Open Patent Publication No. 2012-3712

### SUMMARY OF INVENTION

### Technical Problem

Typically, a brake pedal device is installed within the limited space of the footwell of the driver's seat.

The brake pedal device described above operates such that when the pedal arm is depressed, the master cylinder is operated via the operation rod, which couples the pedal arm to the master cylinder. Due to this configuration, the flexibility in arranging the components of the brake pedal device is limited. As a result, positioning the brake pedal device within such a confined space presents a challenge.

This issue is not limited to brake pedal devices but can similarly arise in other vehicular operation pedal devices, such as accelerator pedal devices and clutch pedal devices.

### Solution to Problem

A vehicular operation pedal device according to one aspect of the present disclosure includes a pedal arm, a telescopic device, and a link mechanism. The pedal arm extends upward from a pedal support shaft and is configured to rotate about a first center line of the pedal support shaft in response to a depression operation by a driver of a vehicle. The telescopic device is located forward of the pedal arm and coupled to the pedal arm. The telescopic device is configured to extend and retract in response to a depression operation of the pedal arm. The link mechanism is provided between the pedal arm and the telescopic device, and includes a coupling link and a coupling lever. The link mechanism is configured to convert a rotational motion of the pedal arm into a telescopic motion of the telescopic device when the pedal arm rotates about the first center line. The coupling link includes a first portion coupled to the pedal arm so as to be rotatable relative to the pedal arm about a second center line extending parallel to the first center line, and a second portion coupled to a first coupling portion of the coupling lever so as to be rotatable relative to the first coupling portion about a third center line extending parallel to the first center line. The coupling lever extends between the coupling link and the telescopic device so as to connect the coupling link and the telescopic device to each other. The coupling lever includes the first coupling portion, a support portion supported by a lever support shaft extending parallel to the pedal support shaft so as to be rotatable about a fourth center line of the lever support shaft, and a second coupling portion coupled to the telescopic device so as to be rotatable relative to the telescopic device about a fifth center line parallel to the fourth center line. The coupling lever has a structure in which the third center line of the first coupling portion, the fourth center line of the support portion, and the fifth center line of the second coupling portion are disposed at positions corresponding to three vertices of an acute triangle when viewed in a direction in which the first center line extends.

### BRIEF DESCRIPTION OF DRAWINGS

Fig. 1 is a side view of a vehicular operation pedal device according to a first embodiment in a non-operated state.
Fig. 2 is a perspective view of the vehicular operation pedal device according to the first embodiment.
Fig. 3 is a side view of the vehicular operation pedal device according to the first embodiment in an operated state.
Fig. 4 is a perspective view of a vehicular operation pedal device according to a second embodiment.
Fig. 5 is a front view of the vehicular operation pedal device according to the second embodiment.
Fig. 6 is a side view of a pedal arm, a link mechanism, and a telescopic device according to the second embodiment.

### DESCRIPTION OF EMBODIMENTS

### First Embodiment

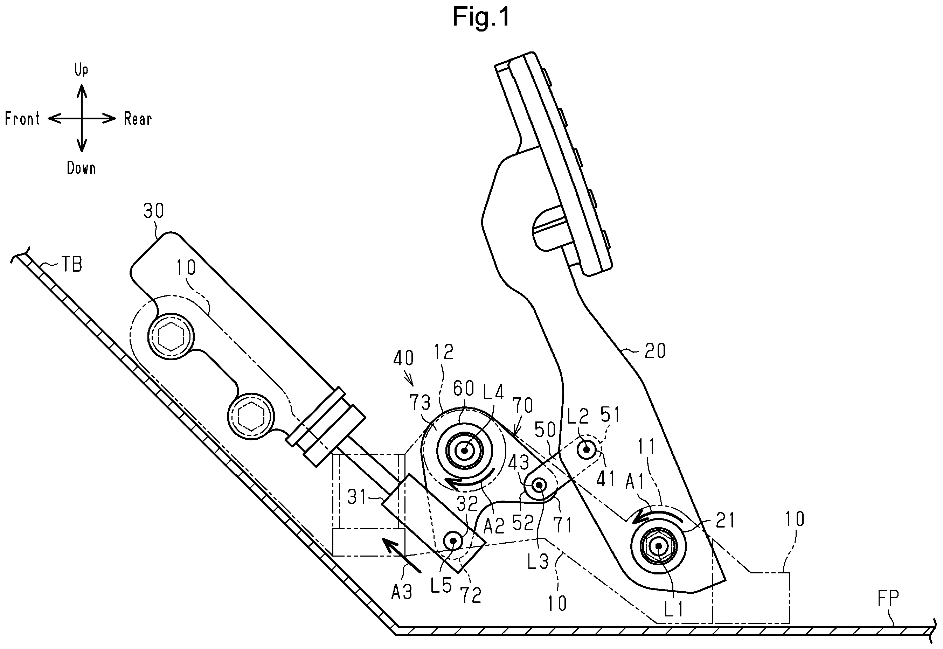

A vehicular operation pedal device according to a first embodiment will now be described with reference to Figs. 1 to 3.

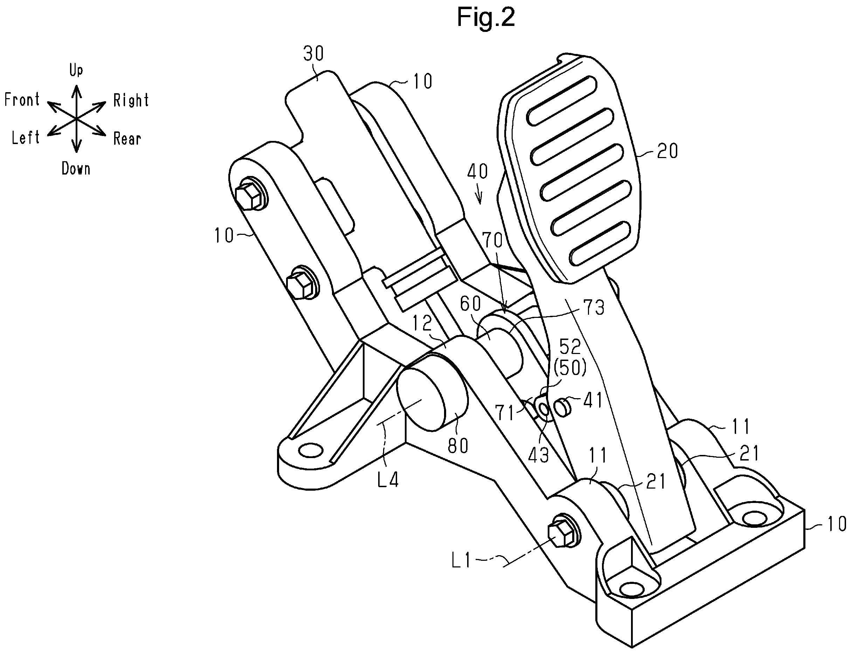

As shown in Figs. 1 and 2, the vehicular operation pedal device includes a base portion 10, a pedal arm 20, a telescopic device 30, and a link mechanism 40.

### Base Portion

The base portion 10 serves as a foundation for assembling various components that enable the functions of the vehicular operation pedal device. These components include a pedal arm 20, a telescopic device 30, and a link mechanism 40. The base portion 10 is fixed in the footwell of the driver's seat in the vehicle. The rear portion of the base portion 10 extends along a floor panel FP. The floor panel FP is a panel member that forms the floor of the vehicle. The front portion of the base portion 10 extends along a toe board TB. The toe board TB is a panel member that forms a lower end portion of the front wall of the passenger compartment. The toe board TB extends forward and obliquely upward from the floor panel FP (toward the upper left in Fig. 1) in a state in which the upper portion is inclined forward relative to the lower portion.

The base portion 10 includes a pedal support portion 11 and a lever support portion 12. The pedal support portion 11 is a portion that supports the pedal arm 20. The pedal support portion 11 is provided at a rear portion in the base portion 10. The lever support portion 12 is a portion that supports the link mechanism 40 (specifically, a lever support shaft 60, which will be discussed below). The lever support portion 12 is provided at an intermediate position of the base portion 10 in the vehicle longitudinal direction.

### Pedal Arm

The pedal arm 20 is an operation member that is depressed by the driver of the vehicle. The pedal arm 20 is provided with a pedal support shaft 21 at a lower portion. The pedal support shaft 21 has a columnar outer surface. A center line of the pedal support shaft 21 (hereinafter, referred to as a first center line L1) extends in the vehicle width direction (a direction orthogonal to the plane of Fig. 1).

In the present embodiment, the pedal support shaft 21 of the pedal arm 20 is supported by the pedal support portion 11 of the base portion 10. Thus, a lower portion of the pedal arm 20 is supported by the pedal support shaft 21. The pedal arm 20 extends upward from the pedal support shaft 21. The pedal arm 20 rotates about the first center line L1 of the pedal support shaft 21 in response to a depression operation by the driver.

### Telescopic Device

Examples of the telescopic device 30 include a master cylinder that applies, to a brake device of the vehicle, a hydraulic pressure for operating the brake device, and a reaction force device that applies a reaction force to the pedal arm 20 when the driver depresses the pedal arm 20. In the present embodiment, the master cylinder is used as the telescopic device 30.

As shown in Figs. 1 and 2, the telescopic device 30 is fixed to the front portion of the base portion 10. The telescopic device 30 is fixed in a position in which the upper portion is inclined forward relative to the lower portion. Accordingly, the telescopic device 30 is disposed in a position extending along the toe board TB.

The telescopic device 30 is located forward of the pedal arm 20, that is, on the left side in Fig. 1. The pedal arm 20 and the telescopic device 30 are provided at positions overlapping with each other when viewed from the rear side of the vehicle. The telescopic device 30 can extend and retract in an oblique direction with respect to the vehicle vertical direction, specifically, in a direction along the toe board TB.

### Link Mechanism

The link mechanism 40 is provided between the pedal arm 20 and the telescopic device 30. The link mechanism 40 is coupled to each of the pedal arm 20 and the telescopic device 30. When the pedal arm 20 is rotated about the first center line L1 of the pedal support shaft 21 by a depression operation by the driver, the link mechanism 40 converts the rotational motion of the pedal arm 20 into a telescopic motion of the telescopic device 30. The structure of the link mechanism 40 will now be described in detail.

The link mechanism 40 includes a coupling link 50, a lever support shaft 60, and a coupling lever 70. In the present embodiment, the components of the vehicular operation pedal device are arranged in sequence from the rear side as follows: the pedal arm 20, the coupling link 50, the coupling lever 70, and the telescopic device 30.

### Coupling Link

The coupling link 50 extends between the pedal arm 20 and the coupling lever 70 so as to couple the pedal arm 20 and the coupling lever 70 to each other.

One end (hereinafter, referred to as a first portion 51) of the coupling link 50 in the longitudinal direction is coupled to the pedal arm 20. The first portion 51 is coupled to the pedal arm 20 so as to be rotatable relative to the pedal arm 20 about a second center line L2. In the present embodiment, the second center line L2 and the first center line L1 of the pedal support shaft 21 extend parallel to each other. Specifically, the first portion 51 is coupled to the pedal arm 20 via a first pin 41 having the second center line L2.

An end (hereinafter, referred to as a second portion 52) of the coupling link 50 opposite to the first portion 51 in the longitudinal direction is coupled to a first coupling portion 71 of the coupling lever 70. The second portion 52 of the coupling link 50 is coupled to the first coupling portion 71 of the coupling lever 70 so as to be rotatable relative to the coupling lever 70 about a third center line L3. In the present embodiment, the third center line L3 and the first center line L1 of the pedal support shaft 21 extend parallel to each other. Specifically, the second portion 52 is coupled to the first coupling portion 71 via a second pin 43 having the third center line L3.

### Lever Support Shaft

The lever support shaft 60 is rotatably supported by the lever support portion 12 of the base portion 10. The lever support shaft 60 is located forward of the pedal support shaft 21 (on the left side in Fig. 1). The lever support shaft 60 has a columnar outer surface. A center line of the lever support shaft 60 (hereinafter, referred to as a fourth center line L4) extends in the vehicle width direction (a direction orthogonal to the plane of Fig. 1). The fourth center line L4 of the lever support shaft 60 extends parallel to the first center line L1 of the pedal support shaft 21. The lever support shaft 60 is rotatable relative to the base portion 10 about the fourth center line L4.

### Coupling Lever

The coupling lever 70 is fixed to the lever support shaft 60. The coupling lever 70 is rotatable relative to the base portion 10 about the fourth center line L4 together with the lever support shaft 60. The coupling lever 70 has the shape of a plate that extends in the longitudinal direction and the vertical direction of the vehicle. The coupling lever 70 extends between the coupling link 50 and the telescopic device 30 so as to couple the coupling link 50 and the telescopic device 30 to each other. The coupling lever 70 is substantially V-shaped when viewed in a direction in which the first center line L1 extends. The coupling lever 70 includes a support portion 73, the first coupling portion 71, and a second coupling portion 72. The support portion 73, the first coupling portion 71, and the second coupling portion 72 are respectively disposed at three sections bulging outward of the substantially V-shaped coupling lever 70.

The support portion 73 is a portion fixed to and supported by the lever support shaft 60. The first coupling portion 71 is a portion coupled to the second portion 52 of the coupling link 50 as described above. The first coupling portion 71 is located above the pedal support shaft 21 of the pedal arm 20.

The second coupling portion 72 is a portion coupled to the telescopic device 30. A coupling portion of the telescopic device 30 includes a clevis 31 as a coupling member having a U-shape in a plan view and a clevis pin 32 as a coupling pin having a columnar shape. A center line of the clevis pin 32 (hereinafter referred to as a fifth center line L5) extends in the vehicle width direction. The fifth center line L5 of the clevis pin 32 extends parallel to the first center line L1 of the pedal support shaft 21. The second coupling portion 72 of the coupling lever 70 is coupled to the telescopic device 30 via the clevis 31 and the clevis pin 32. The clevis pin 32 is located at the lower end of the telescopic device 30. In the present embodiment, the telescopic device 30 extends and retracts by a reciprocating motion of the lower end of the telescopic device 30.

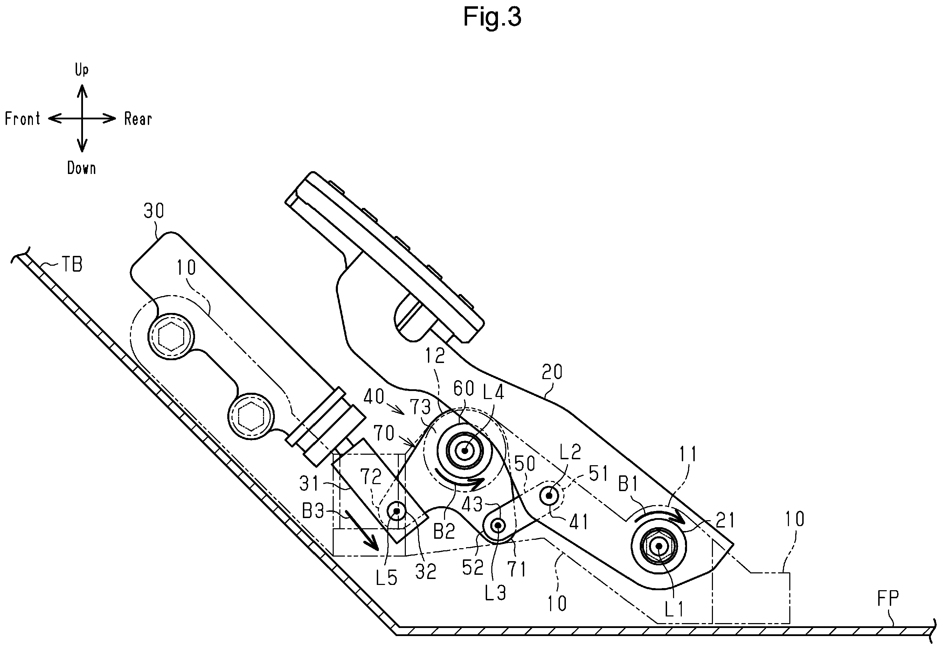

As shown in Fig. 1, the coupling lever 70 has a structure in which the third center line L3 of the first coupling portion 71, the fourth center line L4 of the support portion 73, and the fifth center line L5 of the second coupling portion 72 are disposed at positions corresponding to the three vertices of an acute triangle when viewed in a direction in which the first center line L1 extends. In other words, when the coupling lever 70 is viewed in the direction in which the first center line L1 extends, and a triangle is formed with the third center line L3, the fourth center line L4, and the fifth center line L5 as the three vertices, this triangle is an acute triangle. Furthermore, as shown in Figs. 1 and 3, the coupling lever 70 is arranged such that the third center line L3 of the first coupling portion 71 and the fifth center line L5 of the second coupling portion 72 are located below the fourth center line L4 of the support portion 73 in the vehicle vertical direction (hereinafter simply referred to as "below").

### Rotation Sensor

As shown in Fig. 2, the vehicular operation pedal device of the present embodiment includes a rotation sensor 80 for detecting the amount of a depression operation of the pedal arm 20. The rotation sensor 80 is provided on the lever support shaft 60. Specifically, the rotation sensor 80 is attached to the lever support portion 12 of the base portion 10 so as to be coupled to the lever support shaft 60. The rotation sensor 80 detects the angular position of the coupling lever 70 about the fourth center line L4, i.e., the angular position of the lever support shaft 60, as an index value of the amount of depression operation by the driver. In the present embodiment, a detection signal of the rotation sensor 80 is sent to an electronic control unit (not shown) and is used for vehicle operation control by the electronic control unit.

### Operation

Operation of the vehicular operation pedal device according to the present embodiment will now be described with reference to Figs. 1 and 3. Fig. 1 shows the vehicular operation pedal device in a non-operated state, in which the pedal arm 20 is not depressed. Fig. 3 shows the vehicular operation pedal device in an operated state, in which the pedal arm 20 is depressed.

First, operation of the vehicular operation pedal device when the pedal arm 20 is depressed by the driver will be described.

As shown in Figs. 1 and 3, when the pedal arm 20 is depressed, the pedal arm 20 rotates about the first center line L1 of the pedal support shaft 21 as indicated by arrow A1 in Fig. 1, so as to fall forward. Accordingly, the first coupling portion 71 of the coupling lever 70 is pressed forward and obliquely downward (toward the lower left in Fig. 1) by the second portion 52 of the coupling link 50. Thus, as indicated by arrow A2 in Fig. 1, the coupling lever 70 rotates about the fourth center line L4 of the lever support shaft 60. Accordingly, as indicated by arrow A3 in Fig. 1, the second coupling portion 72 of the coupling lever 70 moves forward and obliquely upward (toward the upper left in Fig. 1). The telescopic device 30 is thus shortened. At this time, the telescopic device 30 generates a hydraulic pressure for operating the brake device of the vehicle.

Next, operation of the vehicular operation pedal device in a case in which the depression operation of the pedal arm 20 by the driver is discontinued will be described.

When the depression operation of the pedal arm 20 is discontinued, the pedal arm 20 pivots about the first center line L1 of the pedal support shaft 21 as indicated by arrow B1 in Fig. 3, so that the pedal arm 20 returns to its pre-depression position (the position shown in Fig. 1). Accordingly, the first coupling portion 71 of the coupling lever 70 is pulled back rearward and obliquely upward (toward the upper right in Fig. 3) by the second portion 52 of the coupling link 50. Thus, as indicated by arrow B2 in Fig. 3, the coupling lever 70 pivots about the fourth center line L4 of the lever support shaft 60. Accordingly, as indicated by arrow B3 in Fig. 3, the second coupling portion 72 of the coupling lever 70 moves rearward and obliquely downward (toward the lower right side in Fig. 3). The telescopic device 30 is extended. At this time, the telescopic device 30 stops generating the hydraulic pressure for operating the brake device of the vehicle.

### Advantages

The vehicular operation pedal device according to the present embodiment has the advantages described below.

(1-1) The coupling lever 70 has a structure in which the third center line L3 of the first coupling portion 71, the fourth center line L4 of the support portion 73, and the fifth center line L5 of the second coupling portion 72 are disposed at positions corresponding to the three vertices of an acute triangle when viewed in a direction in which the first center line L1 extends.

In the present embodiment, the link mechanism 40, including the coupling lever 70 and the coupling link 50, provides flexibility in determining the positional relationship between the pedal arm 20 and the telescopic device 30 by varying the shapes of the coupling lever 70 and the coupling link 50. Therefore, the vehicular operation pedal device can be arranged with high flexibility.

A connecting lever in which the third center line L3 of the first coupling portion 71, the fourth center line L4 of the support portion 73, and the fifth center line L5 of the second coupling portion 72 are positioned at the three vertices of an obtuse-angled triangle is used as a coupling lever of a comparative example. According to the present embodiment, the length of the coupling lever 70 in the vehicle longitudinal direction can be shortened compared to a case in which the coupling lever of the comparative example is used. Accordingly, it is possible to reduce the size of the vehicular operation pedal device such that the dimension of the entire vehicular operation pedal device in the vehicle longitudinal direction is reduced. By reducing the size of the vehicular operation pedal device in this manner, the vehicular operation pedal device can be arranged with high flexibility.

(1-2) The coupling lever 70 is arranged such that the third center line L3 of the first coupling portion 71 and the fifth center line L5 of the second coupling portion 72 are located below the fourth center line L4 of the support portion 73.

According to the present embodiment, it is possible to set the positions of the first coupling portion 71 and the second coupling portion 72 of the coupling lever 70 to positions lower than those in a case in which the coupling lever of the comparative example is used. Therefore, the coupling link 50, which is coupled to the first coupling portion 71, and the telescopic device 30, which is coupled to the second coupling portion 72, can be disposed at positions lower than those in a case in which the coupling lever of the comparative example is used. Accordingly, the vehicular operation pedal device has a compact structure in the vertical direction of the vehicle.

Further, it is possible to adopt a structure in which the second coupling portion 72 of the coupling lever 70 moves forward and obliquely upward in response to a depression operation of the pedal arm 20. Thus, the direction of telescopic motions of the telescopic device 30 can be set to an oblique direction with respect to the vehicle vertical direction. Accordingly, the telescopic device 30 can be disposed along the toe board TB, which extends in a direction oblique to the vehicle vertical direction. Therefore, the telescopic device 30 can be positioned with high space efficiency within the footwell of the driver's seat.

(1-3) The rotation sensor 80 is attached to the lever support shaft 60. According to the present embodiment, the angular position of the coupling lever 70 about the fourth center line L4 is detected by the rotation sensor 80. This allows the amount of a depression operation on the pedal arm 20 to be detected. Further, since the rotation sensor 80 is located forward of the pedal arm 20, a structure is achieved in which the rotation sensor 80 and the feet of the driver are unlikely to interfere with each other, as compared to a case in which the rotation sensor 80 is provided on the pedal support shaft 21. This configuration also helps prevent foreign substances, such as moisture and mud, from adhering to the rotation sensor 80 from the driver's footwear. This improves the durability and reliability of the rotation sensor 80.

### Second Embodiment

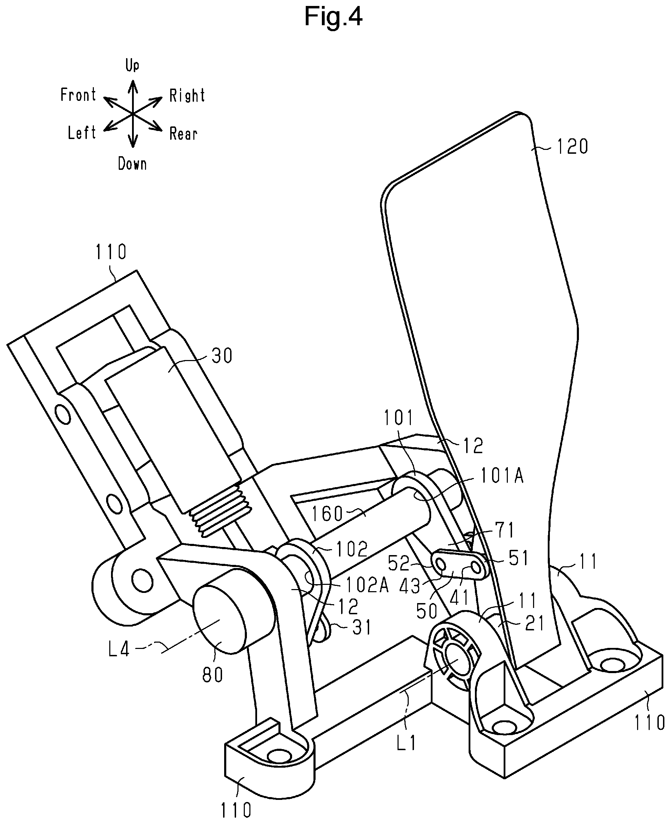

A vehicular operation pedal device according to a second embodiment will now be described with reference to Figs. 4 to 6. Differences from the first embodiment will mainly be discussed. In the following description, among the components according to the present embodiment, the same components as those according to the first embodiment are denoted by the same reference numerals or corresponding reference numerals, and redundant description of the components is omitted.

The vehicular operation pedal device of the present embodiment is different from the vehicular operation pedal device of the first embodiment in the positional relationship between the pedal arm and the telescopic device, the length of the lever support shaft, and the structure of the coupling lever.

### Positional Relationship Between the Pedal Arm and the Telescopic Device

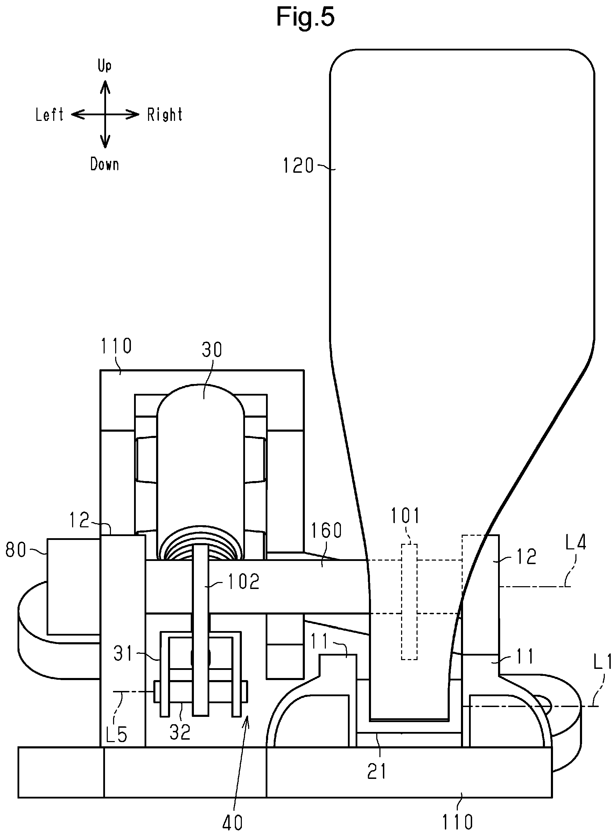

As shown in Figs. 4 and 5, in the present embodiment, a pedal arm 120 and the telescopic device 30 are provided at positions displaced from each other in the vehicle width direction so as not to overlap with each other when viewed in a direction orthogonal to the first center line L1 of the pedal support shaft 21. Specifically, the pedal arm 120 is disposed on the right side of the telescopic device 30 when viewed from the vehicle rear side. In other words, the telescopic device 30 is disposed on the left side of the pedal arm 120 when viewed from the vehicle rear side.

### Length of the Lever Support Shaft

As shown in Figs. 4 to 6, a lever support shaft 160 is provided such that the fourth center line L4 extends in the vehicle width direction. The lever support shaft 160 extends between the pedal arm 120 and the telescopic device 30. The lever support shaft 160 extends from the front portion of the pedal arm 120 to the rear portion of the telescopic device 30.

### Structure of the Coupling Lever

In the present embodiment, a coupling lever 100, which couples the coupling link 50 and the telescopic device 30 to each other, includes two lever members, which are a first coupling lever 101 and a second coupling lever 102. The first coupling lever 101 includes a support portion 101A, which is fixed to and supported by the lever support shaft 160. The second coupling lever 102 includes a support portion 102A, which is fixed to and supported by the lever support shaft 160. The first coupling lever 101 and the second coupling lever 102 are rotatable relative to a base portion 110 about the fourth center line L4 of the lever support shaft 160 together with the lever support shaft 160.

The first coupling lever 101 and the second coupling lever 102 each have the shape of a plate extending in the longitudinal direction and the vertical direction of the vehicle. The first coupling lever 101 is disposed forward of the coupling link 50 and the pedal arm 120. The first coupling portion 71 of the first coupling lever 101 is coupled to the coupling link 50. In the present embodiment, the lever support shaft 160 and the pedal arm 120 are coupled to each other via the coupling link 50 and the first coupling lever 101. The second coupling lever 102 is disposed rearward of the vehicle than the telescopic device 30. The second coupling portion 72 of the second coupling lever 102 is coupled to the telescopic device 30. In the present embodiment, the lever support shaft 160 and the telescopic device 30 are coupled to each other via the second coupling lever 102.

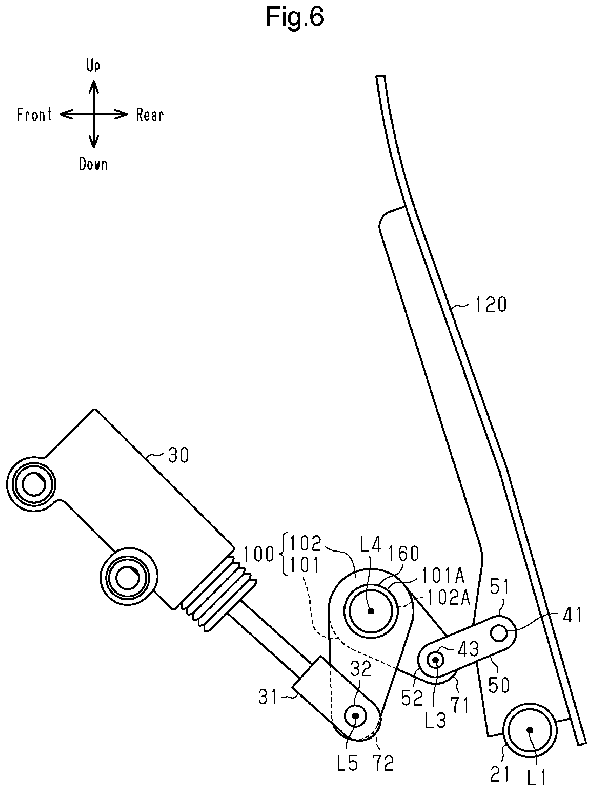

As shown in Fig. 6, in the present embodiment, the coupling lever 100, which includes the first coupling lever 101 and the second coupling lever 102, has a structure described below.

The coupling lever 100, which includes the first coupling lever 101 and the second coupling lever 102, is substantially V-shaped when viewed in a direction in which the first center line L1 extends. The support portion 101A of the first coupling lever 101 and the support portion 102A of the second coupling lever 102 are disposed at one of three sections bulging outward of the substantially V-shaped coupling lever 100. Specifically, the support portion 101A of the first coupling lever 101 and the support portion 102A of the second coupling lever 102 are disposed at locations where the first coupling lever 101 and the second coupling lever 102 overlap with each other when viewed in the direction in which the first center line L1 extends. The first coupling portion 71 of the first coupling lever 101 and the second coupling portion 72 of the second coupling lever 102 are disposed at the remaining two of the three sections bulging outward of the substantially V-shaped coupling lever 100.

The coupling lever 100 has a structure in which the third center line L3 of the first coupling portion 71, the fourth center line L4 of the lever support shaft 160, and the fifth center line L5 of the second coupling portion 72 are disposed at positions corresponding to the three vertices of an acute triangle when viewed in a direction in which the first center line L1 extends. In other words, the coupling lever 100 has a structure in which, when a triangle is formed using the third center line L3 of the first coupling portion 71, the fourth center line L4 of the lever support shaft 160, and the fifth center line L5 of the second coupling portion 72 as the three vertices, the triangle takes the shape of an acute triangle. Also, the coupling lever 100 is arranged such that the third center line L3 of the first coupling portion 71 and the fifth center line L5 of the second coupling portion 72 are located below the fourth center line L4 of the lever support shaft 160. In the present embodiment, the fourth center line L4 corresponds to a fourth center line of the support portion 101A of the first coupling lever 101, and to a fourth center line of the support portion 102A of the second coupling lever 102.

### Advantages

In addition to advantages similar to the advantages (1-1) to (1-3) described above, the vehicular operation pedal device according to the present embodiment achieves the following advantage (2-1).

(2-1) The pedal arm 120 and the telescopic device 30 are provided at positions displaced from each other in the vehicle width direction so as not to overlap with each other when viewed in the direction orthogonal to the first center line L1 of the pedal support shaft 21. With the present embodiment, the vehicular operation pedal device is configured such that the telescopic device 30 does not interfere with a depression operation of the pedal arm 120. Therefore, the pedal arm 120 can be disposed forward of the corresponding position in a device in which the pedal arm 120 and the telescopic device 30 are provided at positions overlapping with each other when viewed from the vehicle rear side. Accordingly, the vehicular operation pedal device can have a compact structure in the longitudinal direction of the vehicle.

### Other Embodiments

The above-described embodiments may be modified as follows. The above-described embodiments and the following modifications may be implemented in combination with each other as long as a technical contradiction does not occur.

In each of the embodiments, instead of using the master cylinder as the telescopic device 30, a reaction force device can be used as the telescopic device 30. In this case, the pedal arm 20, 120 may be used for an accelerator pedal or a clutch pedal.

The telescopic device 30 may be disposed substantially horizontally so as to extend in the vehicle longitudinal direction. In this case, the telescopic device 30 can be disposed so as to extend along the floor panel FP.

In each of the embodiments, the shape of the coupling lever 70, 100 can be changed, for example, to a substantially triangular shape when viewed in the direction in which the first center line L1 extends.

In each of the embodiments, the coupling lever 70, 100 may be disposed such that the third center line L3 and the fifth center line L5 are located above the fourth center line L4.

The vehicular operation pedal device according to each embodiment may also be applied to a vehicular operation pedal device in which a detection switch is provided as the rotation sensor 80 to detect the presence or absence of a pedal depression operation of the pedal arm 20, 120.

The vehicular operation pedal device according to each embodiment may also be applied to a vehicular operation pedal device that does not include the rotation sensor 80.

The vehicular operation pedal device according to each embodiment is not limited to a brake pedal device including the pedal arm 20, 120 serving as a brake pedal, and may also be applied to an accelerator pedal device including an accelerator pedal or a clutch pedal device including a clutch pedal.

### Clauses

The above-described embodiments include configurations described in the following clauses.
[Clause 1] A vehicular operation pedal device, including:
   a pedal arm extending upward from a pedal support shaft and configured to rotate about a first center line of the pedal support shaft in response to a depression operation by a driver of a vehicle;
   a telescopic device located forward of the pedal arm and coupled to the pedal arm, the telescopic device being configured to extend and retract in response to a depression operation of the pedal arm; and
   a link mechanism provided between the pedal arm and the telescopic device, and including a coupling link and a coupling lever, the link mechanism being configured to convert a rotational motion of the pedal arm into a telescopic motion of the telescopic device when the pedal arm rotates about the first center line, wherein
   the coupling link includes:
      a first portion coupled to the pedal arm so as to be rotatable relative to the pedal arm about a second center line extending parallel to the first center line; and
      a second portion coupled to a first coupling portion of the coupling lever so as to be rotatable relative to the first coupling portion about a third center line extending parallel to the first center line,
   the coupling lever extends between the coupling link and the telescopic device so as to connect the coupling link and the telescopic device to each other,
   the coupling lever includes:
      the first coupling portion;
      a support portion supported by a lever support shaft extending parallel to the pedal support shaft so as to be rotatable about a fourth center line of the lever support shaft; and
      a second coupling portion coupled to the telescopic device so as to be rotatable relative to the telescopic device about a fifth center line parallel to the fourth center line, and
   the coupling lever has a structure in which the third center line of the first coupling portion, the fourth center line of the support portion, and the fifth center line of the second coupling portion are disposed at positions corresponding to three vertices of an acute triangle when viewed in a direction in which the first center line extends.
[Clause 2] The vehicular operation pedal device according to clause 1, in which the coupling lever is disposed such that the third center line and the fifth center line are located below the fourth center line in the vertical direction of the vehicle when viewed in the direction in which the first center line extends.
[Clause 3] The vehicular operation pedal device according to clause 1 or 2, further including a rotation sensor provided on the lever support shaft and configured to detect an angular position of the coupling lever about the fourth center line.
[Clause 4] The vehicular operation pedal device according to any one of clauses 1 to 3, in which the pedal arm and the telescopic device are provided at positions displaced from each other in a vehicle width direction so as not to overlap with each other when viewed in a direction orthogonal to the first center line.
[Clause 5] The vehicular operation pedal device according to any one of clauses 1 to 4, in which the telescopic device is a master cylinder configured to apply a hydraulic pressure to a brake device of the vehicle to operate the brake device.

## Claims

1. A vehicular operation pedal device, comprising:
a pedal arm extending upward from a pedal support shaft and configured to rotate about a first center line of the pedal support shaft in response to a depression operation by a driver of a vehicle;
a telescopic device located forward of the pedal arm and coupled to the pedal arm, the telescopic device being configured to extend and retract in response to a depression operation of the pedal arm; and
a link mechanism provided between the pedal arm and the telescopic device, and including a coupling link and a coupling lever, the link mechanism being configured to convert a rotational motion of the pedal arm into a telescopic motion of the telescopic device when the pedal arm rotates about the first center line, wherein
the coupling link includes:
a first portion coupled to the pedal arm so as to be rotatable relative to the pedal arm about a second center line extending parallel to the first center line; and
a second portion coupled to a first coupling portion of the coupling lever so as to be rotatable relative to the first coupling portion about a third center line extending parallel to the first center line,
the coupling lever extends between the coupling link and the telescopic device so as to connect the coupling link and the telescopic device to each other,
the coupling lever includes:
the first coupling portion;
a support portion supported by a lever support shaft extending parallel to the pedal support shaft so as to be rotatable about a fourth center line of the lever support shaft; and
a second coupling portion coupled to the telescopic device so as to be rotatable relative to the telescopic device about a fifth center line parallel to the fourth center line, and
the coupling lever has a structure in which the third center line of the first coupling portion, the fourth center line of the support portion, and the fifth center line of the second coupling portion are disposed at positions corresponding to three vertices of an acute triangle when viewed in a direction in which the first center line extends.

2. The vehicular operation pedal device according to claim 1, wherein the coupling lever is disposed such that the third center line and the fifth center line are located below the fourth center line in the vertical direction of the vehicle when viewed in the direction in which the first center line extends.

3. The vehicular operation pedal device according to claim 1, further comprising a rotation sensor provided on the lever support shaft and configured to detect an angular position of the coupling lever about the fourth center line.

4. The vehicular operation pedal device according to any one of claims 1 to 3, wherein the pedal arm and the telescopic device are provided at positions displaced from each other in a vehicle width direction so as not to overlap with each other when viewed in a direction orthogonal to the first center line.

5. The vehicular operation pedal device according to claim 1, wherein the telescopic device is a master cylinder configured to apply a hydraulic pressure to a brake device of the vehicle to operate the brake device.
